# EUROPEAN PATENT SPECIFICATION

(11) **EP 1 991 462 B1**
(45) Date of publication and mention of the grant of the patent: **25.06.2014**
(21) Application number: 07866996.7
(22) Date of filing: 16.02.2007
(51) Int. Cl.: B64F 5/00

(54) **TRANSPORT TOOL**
TRANSPORTWERKZEUG
OUTIL DE TRANSPORT

(30) Priority: 16.02.2006 US 355601
(43) Date of publication of application: 19.11.2008
(73) Proprietor: THE BOEING COMPANY, Chicago, IL 60606-2016 (US)
(72) Inventor: MASTERS, Matthew J., Puyallup, WA 98374 (US); SCHWINDT, Jeffrey D., Bonney Lak, WA 98391 (US); MENGHINI, Larry L., Auburn, WA 98092 (US); TWYFORD, Jeffrey R., Edgewood, WA 98372 (US)
(74) Representative: Boult Wade Tennant
(86) International application number: PCT/US2007/004063
(87) International publication number: WO 2008/054455

(56) References cited:
- DE-A1- 3 709 832
- US-A- 2 815 566

## Description

### BACKGROUND OF THE INVENTION

### Field of the Invention

This invention relates to a transportation tool used for handling multiple length composite fuselage sections with integrated related tooling and used to assist with trim and Non Destructive Inspection (NDI) operations. Furthermore the invention relates to a method for manufacturing a one-piece composite aircraft fuselage section. Such a transportation tool is known from US-A-2815566.

### Background

Aircraft manufacturing technology has advanced to the state where the creation of a very large one piece aircraft composite fuselage section creating load requirements of near 22679.62kg (50,000 lbs) is possible.

These unique airplane fuselage sections have driven a need for proper handling equipment. For example, in test programs for large aircraft composite fuselage sections, a need has arisen for a tool capable of supporting, positioning and transporting large composite fuselage sections of varying lengths, while the sections are integrated with layup tools and internal sup- port tooling. The sections must be supported and positioned while being transported throughout a factory and while being moved in and out of an autoclave. Heretofore, such large transport tools were not necessary since the manufacture of large composite fuselage sections was not done.

US 2, 815, 566 discloses a work holding stand comprising a supporting frame and including a pair of generally triangular shaped end sections with an extensible intermediate section secured at opposite ends to apices of the end sections. The extensible section includes an outer, elongated sleeve fixed to one of the end sections and an inner cylindrical rod slidably received in the sleeve and fixed to the other end section.

DE 3, 709, 832 discloses a self-propelled device for transporting large aircraft components, such as fuselage sections, having at least one hydraulic propelling motor and a control system which interacts with the running gear. The device has component receptacles which are set up and brought into position for adjustment to the respective component.

### SUMMARY OF THE INVENTION

The present invention provides a tool capable of supporting, positioning and transporting large composite fuselage sections of varying lengths. Moreover, the tool of the present invention is capable of supporting, positioning and transporting the sections throughout a factory and while being moved in and out of an autoclave, with integrated layup tools and internal support tooling.

In an aspect of the invention, a transportation tool is provided which includes a first structural tower, and a second structural tower. A first structural frame member and a second structural frame member are used to secure the first structural tower to the second structural tower to support a payload. The first and second structural frame members define vacuum chamber accumulators.

In another aspect of the invention, a transportation tool is provided for transporting a single composite aircraft fuselage section. The tool includes a first spindle weldment mounted on a first structural tower, and a second spindle weldment mounted on a second structural tower, the spindle weldments are configured to couple the single composite aircraft fuselage section to the first and second structural towers. Also included is a first gimbal assembly configured to allow the first spindle weldment to move independent of the first structural tower, and a second gimbal assembly configured to allow the second spindle weldment to move independent of the second structural tower. The tool further includes a first structural frame member and a second structural frame member for securing the first structural tower to the second structural tower. The first and second structural frame members define vacuum chamber accumulators.

In yet another aspect of the invention, a method is provided for manufacture of a one-piece composite aircraft fuselage which includes loading a composite fuselage into a support structure; performing vacuum bagging operations on the composite fuselage; and maintaining vacuum integrity of the bagged composite fuselage for processing in an autoclave using vacuum accumulators integrated into the support structure.

Additional objects and features of the invention will be set forth in part in the detailed description which follows. It is to be understood that both the foregoing general description and the following detailed description are merely exemplary of the invention, and are intended to provide an overview or framework for understanding the nature and character of the invention as it is claimed.

### BRIEF DESCRIPTION OF THE DRAWINGS

The accompanying drawings are included to provide further understanding of the invention, illustrate various embodiments of the invention, and together with the description serve to explain the principles and operation of the invention. In the drawings, the same components have the same reference numerals. The illustrated embodiment is intended to illustrate, but not to limit the invention. The drawings include the following Figures:
FIG. 1 is a support, position and transport tool for a large payload in.accordance with an embodiment of the present invention;
FIG. 2 is an exploded view of the tool of FIG. 1 in accordance with an embodiment of the present invention;
FIG. 3 is an exploded view of a component of the tool of FIG. 1 in accordance with an embodiment of the present invention;
FIGS. 4A and 4B are perspective views of the first and second towers in accordance with an embodiment of the present invention;
FIG. 5 is a detailed perspective view of a tower of the transport tool of FIG. 1 in accordance with an embodiment of the present invention; and
FIG. 6 is an illustration of a removable disk brake in use with a drive system in accordance with an embodiment of the present invention.

### DETAILED DESCRIPTION OF THE INVENTION

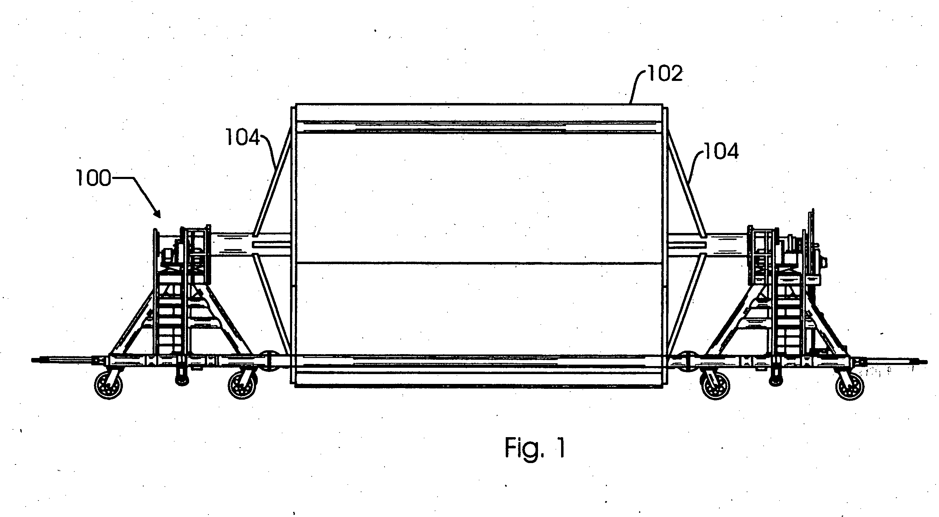

FIG. 1 is an illustration of a multi-use transport tool 100 or cart created to support, position and transport a payload 102, with a capacity of approximately 22679.62kg (50,000 lbs). In one embodiment, payload 102 includes a composite fuselage section of an aircraft and may further include integrated layup and support tooling. As an example of the capacity of tool 100, payload 102 may be a payload up to 12.8m (42 ft) long with a diameter of about 6.1m (20 ft).

Payload 102 is manufactured using well known composite manufacturing techniques using tape layup processes that require the use of an autoclave to cure the composite material. Accordingly, tool 100 is capable of enduring adverse environments such as those generated by an autoclave, for example, elevated temperature of 232 degrees C (450 degrees F) and elevated pressures of 620.5kPa (90 psi). Tool 100 may be used to support and transport payload 102 from an area including a tape layup machine to an area housing the autoclave. Tool 100 may be required to support payload 102 in the environment created by the autoclave for the duration of a cure cycle. Tool 100 may then be used to transport payload 102 to non-destructive inspection (NDI) and Trim area.

After tool 100 has been used to support payload 102 throughout the composite layup and curing process, tool 100 may then be used in conjunction secondary support tooling to transport payload 102 to a location which may be, for example, as far as 3.2km (two miles away). As described below, tool 100 includes features to minimize deflection in payload 102 caused by dynamic load effects experienced during the entire transport sequence.

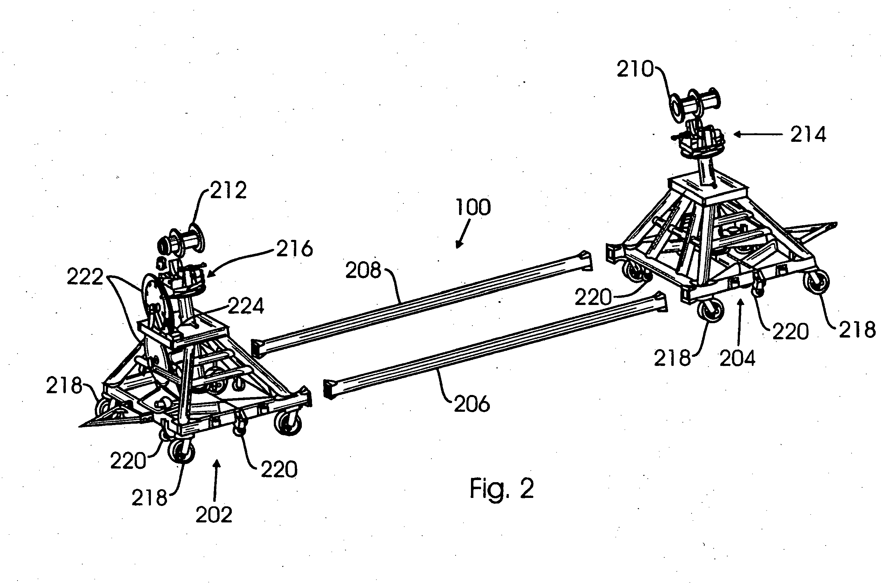

FIG. 2 is an exploded view of tool 100 in accordance with an embodiment of the present invention. In one embodiment, tool 100 includes first tower 202, second tower 204, first side rail 206, second side rail 208, free end spindle weldment 210, geared end spindle weldment 212, free end gimbal assembly 214, and geared end gimbal assembly 216. The transportation function of tool 100 is facilitated with eight swivel casters 218, twelve autoclave casters 220, a pneumatic powered drive system 222 and a pneumatic disk brake system 224 with pneumatic controls.

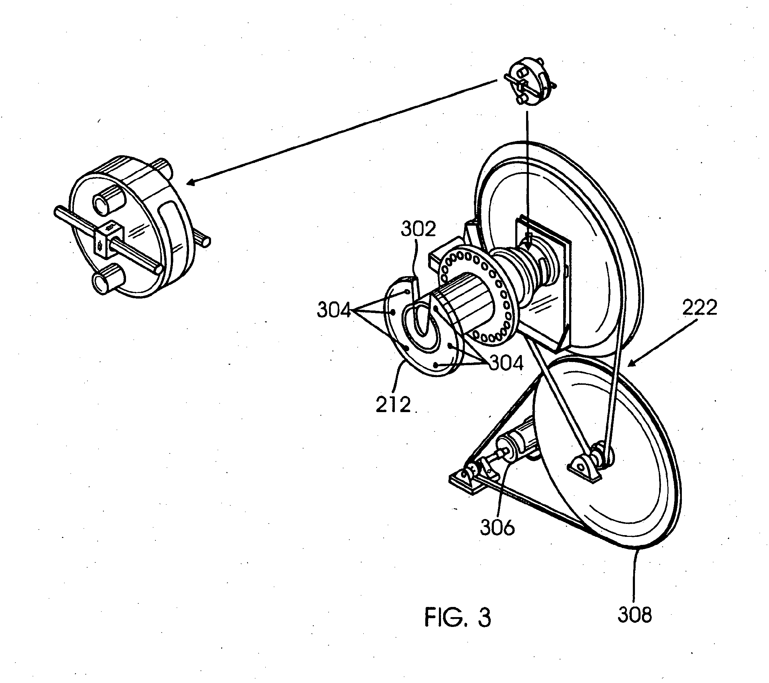

The supported payload 102 indexes to spindle weldments 210 and 212 with a receptacle 302 (FIG. 3) that captures a spherical hub (not shown). As shown in FIG. 1, generally, the hub along with mandrel 104 is made an integrated part of payload 102 and thus is common among different types of payloads.

After indexing payload 102, mandrel 104, supporting payload 102, and tool 100 may then be bolted at spindle weldments 210 and 212, for example, along the bolt pattern 304 shown in FIG. 3.

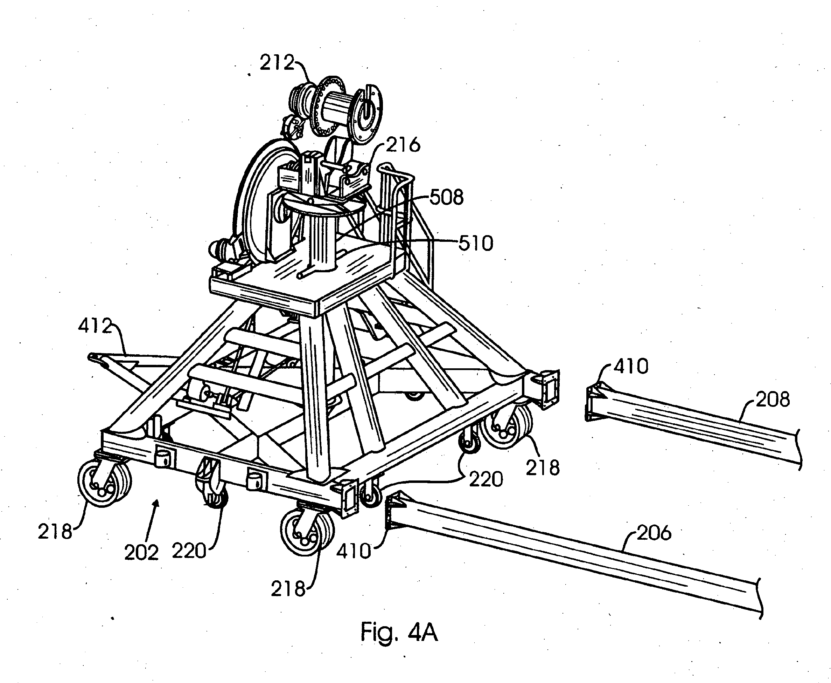

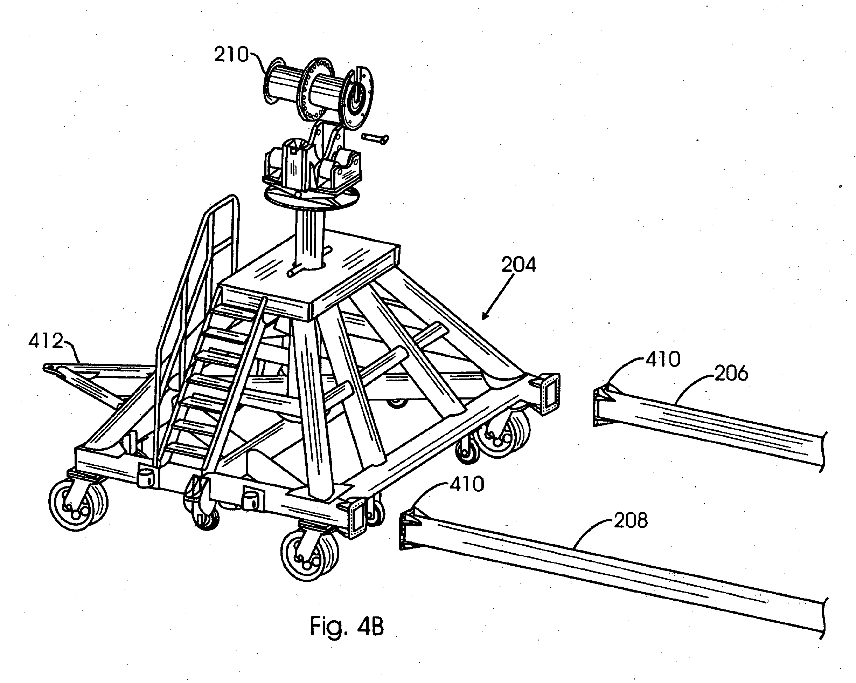

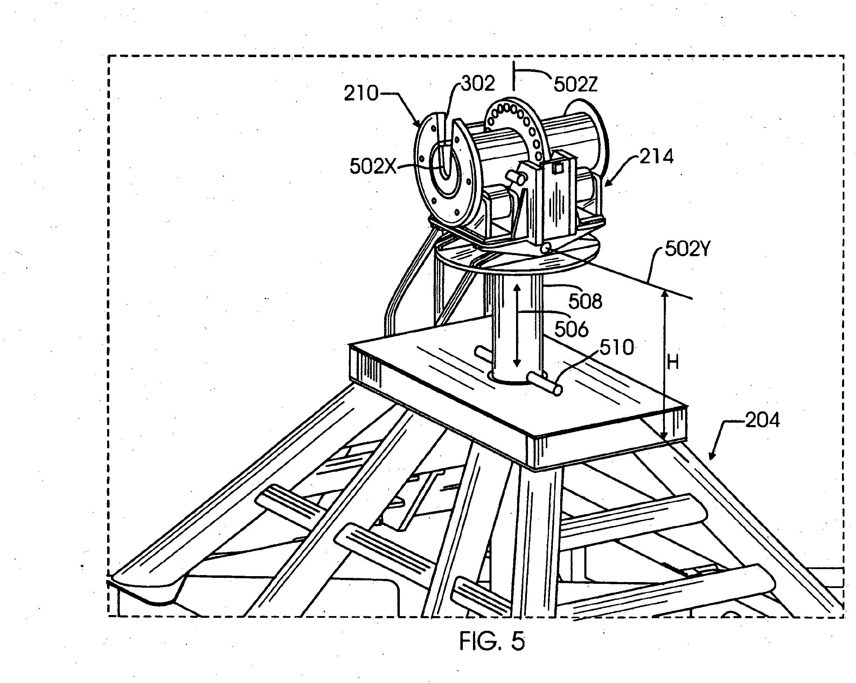

As shown in FIGS. 4A, 4B and 5, spindle weldments 210 and 212 each rest on gimbal assemblies 214 and 216, respectively. Each gimbal assembly 214 and 216 is supported by structural first tower 202 and second tower 204. Towers 202 and 204 can be made of any suitable material, preferably steel.

Tool 100 experiences various transportation routes. For example, the uncured payload 102 is transported from the layup area to the cure area. The post cure payload 102 is transported from the cure area to the trim, test and assembly area. The trimmed payload 102 is transported from the trim/assembly area across roadways (which can include railroad tracks) to various other locations, such as a paint hanger. All of these moves cause payload 102 to experience dynamic effects created by rough and uneven surfaces. As a result, the relative position of first tower 202 and second tower 204 see movement, deflection, racking and vibration. Undesirable loads, deflections, racking or vibrations can be transferred into and become detrimental to the production payload 102. For example, wrinkles may develop in the pre-cured payload 102 when moving it from the layup area to the cure area.

In accordance with an embodiment of the present invention, gimbal assemblies 214 and 216 are incorporated into tool 100 to reduce the effect of the undesirable loads. Gimbal assemblies 214 and 216 minimize induced deflections of the pre-cured and post cured payload 102 (i.e. composite fuselage section) as well as provide bearings for support and rotation.

Gimbal assemblies 214 and 216 allow payload 102 to be supported independent of the deflections experienced by tool 100. Gimbal assemblies 214 and 216 allow payload 102 and spindle weldments 210 and 212 to rotate about longitudinal axis 502x, lateral horizontal axis 502y, and vertical axis 502z using, for example, a set of roller bearings.

As best illustrated in FIG. 5 with regard to gimbal assembly 214, each gimbal assembly 214 and 216 may be repositioned as indicated by arrow 506 to an elevated height H. Height H may range from 0 ft to about 3 ft. To move gimbal assemblies 214 and 216 along arrow 506, payload 102 must be removed. With the main load removed, gimbal assemblies 214 and 216 are lifted to expose a portion of column 508. A pin 510 is positioned through column 508 to hold column 508 at the elevated position H. The ability to raise and lower gimbal assemblies 214 and 216 assists NDI, bagging and trimming operations.

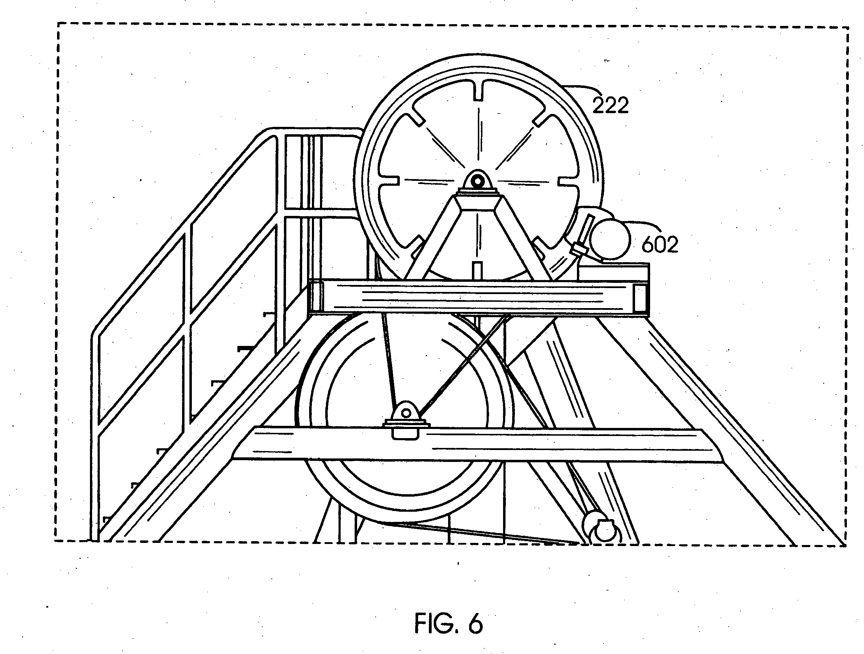

As shown in FIGS. 3, 4A and 6, spindle weldment 212 on first tower 202 at the drive end of tool 100 is coupled to drive system 222 that controls longitudinal rotation of payload 102.

In one embodiment, drive system 222 is pneumatically powered. For example, drive system 222 may operate with shop supplied air routed thru a control box. In one embodiment, as shown in FIG. 3, load may be transmitted by an air motor 306 and a series of chain driven gears 308. In one embodiment, through a particular arrangement of gears, motor 306 can generate an output beyond 11.253kNm (8300 ft-lbs) of torque.

In one embodiment, drive system 222 rotates payload 102 both in the clockwise and counterclockwise directions. When motor 306 is powered "on", pneumatic disk brake 602 is disengaged.

When motor 306 is powered "off, pneumatic disk brake 602 engages. Once payload 102 comes to rest, pneumatic disk brake 602 prevents payload 102 from any undesirable rotation. In one embodiment, disk brake 602 may resist up to 22.506kNm (16600 ft-lbs) of torque, including mandated factors of safety. In one embodiment, air motor 306 and disk brake 602 are removable from tool 100 so that air motor 306 and disk brake 602 may not be exposed to the autoclave environment. Once the autoclave operations are complete, motor 306 and brake 602 may be reinstalled.

In one operational example, the power and braking systems may be expected to turn and stop an unbalanced payload 102 of up to 11.298kNm (8,333 ft-lbs) of torque. In this example, payload 102 is a composite fuselage section. Due to layup tool manufacturing and layup variability, a 222kN (50 kip) load could vary from the theoretical axis of rotation by up to 5.08cm (2 in). Also, different geometries of fuselage sections can add to the generation of off balanced loads. The integrated power and braking systems, reduce the risk to personnel and property.

It is undesirable for an unbalanced payload 102 to spool freely. The prevention of spooling may be controlled by applying back pressure to the air motor. However, air motors that withstand the amount of load contemplated in this example are not known to be available.

Since the system is pneumatically powered, it functions such that when the air is on, motor 306 turns and brake 602 is disengaged. In one embodiment, to power air motor 306 an operator must physically hold the control knob to an "on" position. When the air is off, motor 306 ceases operation and a spring loaded brake 602 is applied. Brake 602 is disengaged with air pressure and engaged by releasing the air pressure in order to activate the spring mechanism.

Alternatively, a set of lock pins as shown in FIG. 4B, one per tower 202 and 204, may be inserted through bearing assemblies on gimbal assemblies 214 and 216 to serve as a backup to brake 602 for prevention of rotation during stationary operations. In one embodiment, the lock pin and housing are engineered to resist over 56.402kNm (41600 ft-lbs) of torque including mandated factors of safety. Additionally, the lock pins serve the same function for ground transportation operations. The pins are installed and removed manually.

As shown in FIG. 4B, spindle weldment 210 on second tower 204 at the free end of tool 100 rests on bearings and allows for longitudinal rotation. Spindle weldment 210 also allows for longitudinal translation, which may be caused by thermal expansion resulting from the heat experienced during the autoclave cure cycle.

As shown in FIGS. 2, 4A and 4B, first tower 202 and second tower 204 are joined together by first side rail 206, second side rail 208 and fasteners 410.
In one embodiment, hollow side rails 206 and 208 serve as vacuum chambers (negative pressure accumulators) to maintain vacuum pressure to payload 102, such as a bagged pre-cured composite fuselage sections. Side rails 206 and 208 are equipped with the proper fittings to connect vacuum hoses.

Typically, vacuum accumulators are a separate independent system attached to transport tools. In accordance with the present invention, integrated parts of tool 100, namely hollow side rails 206 and 208, are used as vacuum accumulators. This adaptation reduces tooling costs.

Vacuum accumulators 206 and 208 are used to hold vacuum on bagged payload 102 while payload 102 is being transported, for example, from the layup area to the curing area. The integrated vacuum system may also be used after cure to transport payload 102 to the NDI and trim area.

If vacuum loss should occur during transport, pieces of payload 102, such as caul plates and the like could dislodge.

In one embodiment, once all air is pumped out of side rail chambers 206 and 208, hoses are disconnected from valves leaving side rail chambers 206 and 208, now charged with negative pressure. When needed in the transport process, hoses can be re-connected from side rail chambers 206 and 208 to bagged payload 102. In this embodiment, bagged payload 102 has previously had all air evacuated from it and sealed. When bagged payload 102 is connected via the hoses to side rail chambers 206 and 208, the valves are opened so that the vacuum pressure in side rail chambers 206 and 208 is transferred to bagged payload 102. In this manner, vacuum pressure can be maintained on bagged payload 102 such that any leaking in the bag system is overcome and bagged payload 102 can be safely held together and transported.

As best shown in FIGS. 4A and 4B, for ground transportation, each tower 202 and 204 has four spring loaded swivel casters 218.

To shuttle payload 102 in and out of the autoclave, spring loaded swivel casters 218 are removed from each tower 202 and 204. Towers 202 and 204 are equipped with jack support points to raise and lower the towers. Using the jack supports, tool 100 is lowered on to a different set of casters 220, referred to as autoclave casters 220. Each tower 202 and 204 can have at least six autoclave casters 220. Each autoclave casters 220 may have a raised ridge circumventing the caster which coordinates to recessed floor mounted steel tracks.

Again referring to FIGS. 4A and 4B, each tower 202 and 204 may be equipped with a tow bar 412. Tow bar 412 is used to connect the assembled tool 100 to a tug or fork truck. One tow bar may be used for longitudinal towing and the other attached to the side for lateral positioning.

Accordingly, the scope of the present invention should not be limited to the particular embodiments illustrated and described herein, as they are merely exemplary in nature, but rather, is as provided in the claims appended hereafter.

## Claims

1. A transportation tool comprising:
a first tower (202);
a second tower (204);
a first side rail (206) and a second side rail (208) securing said first tower (202) to said second tower (204) to support a payload; the transportation tool **characterised in that**:
said first and second side rails define vacuum chamber accumulators.

2. The transportation tool of Claim 1, wherein said first and second side rails (206, 208) maintain vacuum integrity of a payload bagged for processing in an autoclave.

3. The transportation tool of Claim 1, wherein said payload comprises a one-piece composite fuselage section.

4. The transportation tool of Claim 1, further comprising casters (218) for rolling said transportation tool across a surface.

5. The transportation tool of Claim 1, further comprising a first spindle weldment (212) mounted on the first tower (202) and a second spindle weldment (210) mounted on the second tower (204) for coupling the payload to the first and second towers.

6. The transportation tool of Claim 1, further comprising a first gimbal assembly (216) mounted on the first tower (202) and a second gimbal assembly (214) mounted on the second tower (204), the first and second gimbal assemblies configured to allow the payload to move independently of the first and second towers.

7. The transportation tool of Claim 6, wherein the first and second gimbal assemblies (214, 216) are each mounted on a moveable column (50 8) configured to raise and lower the gimbal assemblies.

8. The transportation tool of Claim 1, further comprising a drive system (222) configured to rotate the payload.

9. The transportation tool of Claim 1, further comprising a brake system (224) configured to keep the payload stationary.

10. The transportation tool of Claim 9, wherein said brake system further comprises pins that lock the payload in the stationary position.

11. A method for manufacturing a one-piece composite aircraft fuselage section, comprising:
loading a composite fuselage section (102) into a support structure;
performing vacuum bagging operations on the composite fuselage section; and
maintaining vacuum integrity of the bagged composite fuselage section for processing in an autoclave using vacuum accumulators (206, 208) integrated into the support structure.

12. The method of claim 11, further comprising:
rotating the composite fuselage section, when the composite fuselage section is supported by the support structure, using a drive system coupled to the support structure, the support structure comprising a first spindle weldment (212) resting on a gimbal assembly (216) supported by a first tower (202) and a second spindle weldment (210) resting on a second gimbal assembly (214) supported by a second tower (204), the drive system coupled to the first spindle weldment (212); and
decelerating the rotation of the composite fuselage section and holding the composite fuselage section stationary when rotation ceases using a brake system (602) engagable with the drive system.

13. The method of either claims 11 or 12 further comprising;
transporting the composite fuselage section on the support structure after manufacture.

## Patentansprüche

1. Transportwerkzeug, das aufweist:
einen ersten Turm (202),
einen zweiten Turm (204),
eine erste Seitenleiste (206) und eine zweite Seitenleiste (208),
die den ersten Turm (202) an dem zweiten Turm (204) zum Tragen einer Nutzlast befestigen, wobei das Transportwerkzeug **dadurch gekennzeichnet ist, dass**
die erste und die zweite Seitenleiste
Vakuumkammerakkumulatoren bilden.

2. Transportwerkzeug nach Anspruch 1, worin die erste und die zweite Seitenleiste (206, 208) die Vakuumbedingung einer Nutzlast aufrechterhalten, die für die Weiterverarbeitung in einem Autoklaven vakuumverpackt ist.

3. Transportwerkzeug nach Anspruch 1, worin die Nutzlast eine einstückige Luftfahrzeugrumpfsektion aus Verbundmaterial umfasst.

4. Transportwerkzeug nach Anspruch 1, das ferner Lenkrollen (218) für ein Rollen des Transportwerkzeugs über eine Oberfläche aufweist.

5. Transportwerkzeug nach Anspruch 1, das ferner eine erste geschweißte Spindel (212), die an dem ersten Turm (202) befestigt ist, und eine zweite geschweißte Spindel (210), die an den zweiten Turm (204) befestigt ist, aufweist, um die Nutzlast an dem ersten und zweiten Turm anzukoppeln.

6. Transportwerkzeug nach Anspruch 1, das ferner eine erste kardanische Anordnung (216), die an dem ersten Turm (202) befestigt ist, und eine zweite kardanische Anordnung (214), die an dem zweiten Turm (204) befestigt ist, aufweist, wobei die erste und die zweite kardanische Anordnung so ausgebildet sind, dass die Nutzlast unabhängig vom ersten und zweiten Turm bewegt werden kann.

7. Transportwerkzeug nach Anspruch 6, worin die erste und die zweite kardanische Anordnung (214, 216) jeweils an einer bewegbaren Säule (508) angebracht sind, die zum Heben und Senken der jeweiligen kardanische Anordnung ausgebildet ist.

8. Transportwerkzeug nach Anspruch 1, das ferner ein Antriebssystem (222) aufweist, das zum Drehen der Nutzlast ausgebildet ist.

9. Transportwerkzeug nach Anspruch 1, das ferner ein Bremssystem (224) aufweist, das ausgebildet ist, die Nutzlast stationär zu halten.

10. Transportwerkzeug nach Anspruch 9, worin das Bremssystem ferner Stifte aufweist, die die Nutzlast in der stationären Position arretieren.

11. Verfahren zur Herstellung einer einstückigen Luftfahrzeugrumpfsektion aus Verbundmaterial, das aufweist:
Beladen einer Tragekonstruktion mit einer Verbundmaterial-Rumpfsektion (102),
Durchführen von Vakuumverpackungsvorgängen an der Verbundmaterial-Rumpfsektion und
Aufrechterhalten der Vakuumbedingung der für die Weiterverarbeitung in einem Autoklaven vakuumverpackten Verbundmaterial-Rumpfsektion unter Verwendung von in die Tragekonstruktion integrierten Vakuumakkumulatoren (206, 208).

12. Verfahren nach Anspruch 11, das ferner aufweist:
Drehen der Verbundmaterial-Rumpfsektion, wenn die Verbundmaterial-Rumpfsektion von der Tragekonstruktion getragen wird, unter Verwendung eines mit der Tragekonstruktion verbundenen Antriebssystems, wobei die Tragekonstruktion eine erste geschweißte Spindel (212), die auf einer von einem ersten Turm (202) getragenen ersten kardanischen Anordnung (212) aufliegt, und eine zweite geschweißte Spindel (210), die auf einer von einem zweiten Turm (204) getragenen zweiten kardanischen Anordnung (214) aufliegt, aufweist, wobei das Antriebssystem mit der ersten geschweißten Spindel (212) gekoppelt ist, und
Verlangsamen der Drehung der Verbundmaterial-Rumpfsektion, wobei die Verbundmaterial-Rumpfsektion nach Beendigung der Drehung unter Verwendung eines mit dem Antriebssystem betätigbaren Bremssystems (602) stationär gehalten wird.

13. Verfahren nach Anspruch 11 oder 12, das ferner ein Transportieren der Verbundmaterial-Rumpfsektion auf der Tragekonstruktion nach der Fertigung umfasst.

## Revendications

1. Outil de transport, comprenant :
une première tour (202) ;
une deuxième tour (204) ;
un premier rail latéral (206) et un deuxième rail latéral (208) fixant ladite première tour (202) à ladite deuxième tour (204) pour supporter une charge utile ; l'outil de transport étant **caractérisé en ce que** :
lesdits premier et deuxième rails latéraux définissent des accumulateurs de chambre à vide.

2. Outil de transport selon la revendication 1, dans lequel lesdits premier et deuxième rails latéraux (206, 208) maintiennent l'intégrité du vide d'une charge utile emballée pour un traitement dans un autoclave.

3. Outil de transport selon la revendication 1, dans lequel ladite charge utile comprend une section de fuselage composite en une pièce.

4. Outil de transport selon la revendication 1, comprenant en outre des rouleaux (218) pour faire rouler ledit outil de transport sur une surface.

5. Outil de transport selon la revendication 1, comprenant en outre une soudure de première broche (212) montée sur la première tour (202) et une soudure de deuxième broche (210) montée sur la deuxième tour (204) pour le couplage de la charge utile aux première et deuxième tours.

6. Outil de transport selon la revendication 1, comprenant en outre un premier ensemble de suspension (216) monté sur la première tour (202) et une deuxième ensemble de suspension (214) monté sur la deuxième tour (204), les premier et deuxième ensembles de suspension étant configurés pour permettre à la charge utile de se déplacer indépendamment des première et deuxième tours.

7. Outil de transport selon la revendication 6, dans lequel les premier et deuxième ensembles de suspension (214, 216) sont chacun montés sur une colonne mobile (508) configurée pour relever et abaisser les ensembles de suspension.

8. Outil de transport selon la revendication 1, comprenant en outre un système d'entraînement (222) configuré pour faire tourner la charge utile.

9. Outil de transport selon la revendication 1, comprenant en outre un système de freinage (224) configuré pour maintenir la charge utile stationnaire.

10. Outil de transport selon la revendication 9, dans lequel ledit système de freinage comprend en outre des axes qui verrouillent la charge utile dans la position stationnaire.

11. Procédé de fabrication d'une section de fuselage d'avion composite en une pièce, comprenant :
charger une section de fuselage composite (102) dans une structure de support ;
exécuter des opérations d'emballage sous vide sur la section de fuselage composite ; et
maintenir l'intégrité du vide de la section de fuselage composite emballée pour le traitement dans un autoclave en utilisant des accumulateurs de vide (206, 208) intégrés dans la structure de support.

12. Procédé selon la revendication 11, comprenant en outre :
faire tourner la section de fuselage composite, lorsque la section de fuselage composite est supportée par la structure de support, en utilisant un système d'entraînement couplé à la structure de support, la structure de support comprenant une soudure de première broche (212) reposant sur un ensemble de suspension (216) supporté par une première tour (202) et une soudure de deuxième broche (210) reposant sur un deuxième ensemble de suspension (214) supporté par une deuxième tour (204), le système d'entraînement étant couplé à la soudure de première broche (212) ; et
décélérer la rotation de la section de fuselage composite et maintenir la section de fuselage en composite stationnaire lorsque la rotation s'arrête en utilisant un système de freinage (602) pouvant être mis en prise avec le système d'entraînement.

13. Procédé selon l'une quelconque des revendications 11 ou 12, comprenant :
le transport de la section de fuselage composite sur la structure de support après la fabrication.
